# EUROPÄISCHE PATENTSCHRIFT

(11) **EP 4 589 886 B1**
(45) Veröffentlichungstag und Bekanntmachung des Hinweises auf die Patenterteilung: **04.02.2026**
(21) Anmeldenummer: 25152230.6
(22) Anmeldetag: 16.01.2025
(51) Int. Cl.: H04L 9/40, H04Q 9/00, H04W 12/03, G01D 4/00, H04W 12/08, H04W 12/40, H04W 88/16

(54) **SMART METER GATEWAY UND VERFAHREN ZUM BETRIEB EINES SMART METER GATEWAYS**
SMART METER GATEWAY AND METHOD FOR OPERATING A SMART METER GATEWAY
PASSERELLE DE COMPTEUR INTELLIGENT ET PROCÉDÉ DE FONCTIONNEMENT D'UNE PASSERELLE DE COMPTEUR INTELLIGENT

(30) Priorität: 17.01.2024 DE 102024101272
(43) Veröffentlichungstag der Anmeldung: 23.07.2025
(73) Patentinhaber: Theben Smart Energy GmbH, 72401 Haigerloch (DE)
(72) Erfinder: Heumesser, Roland, 72108 Rottenburg (DE); Kapusta, Andreas, 72351 Geislingen (DE); Stehle, Jochen, 72401 Haigerloch (DE)
(74) Vertreter: Westphal, Mussgnug & Partner Patentanwälte mbB

(56) Entgegenhaltungen:
- EP-B1- 2 812 837
- DE-A1- 102020 000 481
- DAVID VON OHEIMB ED - JORGE CUELLAR: "IT Security Architecture Approaches for Smart Metering and Smart Grid", 3 December 2012, SMART GRID SECURITY, SPRINGER BERLIN HEIDELBERG, BERLIN, HEIDELBERG, PAGE(S) 1 - 25, ISBN: 978-3-642-38029-7, XP047027438

## Beschreibung

Smart Meter Gateways (SMGW) sind die zentralen Komponenten intelligenter Messsysteme. Sie empfangen Messdaten von Zählern, speichern diese und bereiten sie für Marktakteure auf. Dementsprechend dienen sie als zentrale Kommunikationseinheit intelligenter Messsysteme, über die die Kommunikation
- mit dem Lokalen Metrologischen Netz (Local Metrological Network, LMN) mit Verbrauchsmesstellen eines oder mehrerer Verbraucher,
- mit dem Heimnetz (Home Area Network, HAN) des Letztverbrauchers, insbesondere mit steuerbaren Energieverbrauchern oder Energieerzeugern, und
- mit dem Weitverkehrsnetz (Wide Area Network, WAN), insbesondere mit dem SMGW-Administrator und externen Marktteilnehmern
abgewickelt wird.

Smart Meter Gateways unterliegen strengen sicherheitstechnischen Richtlinien. Die Einhaltung dieser Richtlinien müssen entsprechend in einem Zertifizierungsprozess des BSI nachgewiesen werden. Dabei werden alle sicherheitskritischen Elemente, welche der Zertifizierung, unterliegen im sogenannten "Target of Evaluation" (TOE) zusammengefasst. Dieses TOE wird durch das Protection Profile (PP) für SMGWs umrissen.

Gemäß dem aktuellen Stand der Technik wird die Anbindung der Netzwerkkommunikation üblicherweise über Mobilfunk-Module außerhalb des TOEs realisiert.

Weiterer Stand der Technik ist die Europäische Patentanmeldung EP2812837B1.

Ein Problem ergibt sich dabei daraus, dass für den operativen Betrieb der SMGWs die (großen) Messstellenbetreiber die Möglichkeit brauchen, den Betrieb des SMGW zu überwachen und ggf. für den Betrieb wichtige Konfigurationen und Parameter zu korrigieren. Beispiele für solche Situationen sind die Überwachung der LTE Signalqualität oder die Änderung des Metering APN, wenn der Metering-Betrieb von Gateways in ein anderes Subnetz umgezogen werden soll. Die hierfür notwendigen Funktionen werden nachfolgend unter dem Begriff "Netzwerkmanagement /NwMgmt)-Funktionen" zusammengefasst.

Dies erfolgt meistens aus sicherheitstechnischen und aus organisatorischen Gründen in komplett separaten Abteilungen, welche nichts mit der eigentlichen Stromnetzüberwachung zu tun haben und auch keine offiziellen Gateway Administrator (GWA) Rechte wahrnehmen.

Um solche Netzwerkmanagement(NwMgmt)-Funktionen zu realisieren ist es bekannt, separate Kommunikationsmodule zu verwenden, die mit einem eigenen Betriebssystem -typischerweise einem embedded Linux-System- das Modem des Mobilfunkmoduls mit der Funktionalität eines Routers und des Netzwerkmanagements verbinden, so dass das Kommunikationsmodul Daten, die Netzwerkmanagement-Funktionen betreffen und Daten, die die Kommunikation mit dem Gateway-Administrator oder externen Marktteilnehmern betreffen, differenziert weiterleiten kann.

Im Rahmen der Zertifizierung eines SMGW wird darauf geachtet, dass die sicheren Kommunikationskanäle, welche das SMGW bereitstellt nicht kompromittiert werden können und somit auch kein Einfluss auf die transportierten Messwerte und Schaltvorgänge genommen werden können. Dennoch könnte die Kommunikation zum SMGW durch ein kompromittiertes NwMgmt gezielt gestört werden, was die Verfügbarkeit der Dienste verhindern kann und damit letztendlich die Stabilität des gesamten Stromnetzes beeinflussen kann.

Die Aufgabe der Erfindung besteht daher darin, einen Smart Meter Gateway und ein Verfahren zum Betrieb eines Smart Meter Gateways anzugeben, auf bzw. mit dem ein Netzwerkmanagement mit verbesserter Sicherheit betreibbar ist.

Diese Aufgabe wird gelöst durch einen Smart Meter Gateway mit den Merkmalen des Anspruchs 1 und ein Verfahren zum Betrieb eines Smart Meter Gateways mit den Merkmalen des Anspruchs 5. Vorteilhafte Weiterbildungen der Erfindung sind Gegenstand der jeweiligen abhängigen Ansprüche.

Das erfindungsgemäße Smart Meter Gateway weist ein Mobilfunk-modul auf, das eingerichtet ist, um über ein Mobilfunknetz Messdaten an einen autorisierten Empfänger weiterzuleiten. Genauer gesagt stellt das Mobilfunkmodul üblicherweise eine "unsichere" LTE Verbindung zur Datenübertragung zur Verfügung, die vom Smart Meter Gateway genutzt wird, um mehrere "sichere" TLS Kanäle zur Kommunikation aufzubauen.

Darüber hinaus umfasst das Smart Meter Gateway erfindungsgemäß einen Prozessor, der mit einem Arbeitsspeicher und/oder einem Flashspeicher zusammenwirkt, um auf einem Betriebssystem insbesondere eine Applikationssoftware für SMGWs zu betreiben, mit der Messdaten ausgelesen und verschlüsselt zur Weiterleitung an den autorisierten Empfänger an das Mobilfunkmodul übergeben werden. Ferner können auf dem Betriebssystem auch Programme zu Logging und zur Prozesssteuerung ablaufen. All diese Funktionen können zu einer Applikationssoftware für SMGWs zusammengefasst sein.

Typischerweise bilden Prozessor, Arbeitsspeicher und/oder Flashspeicher die wesentlichen Bestandteile des Target of Evaluation und sind so ausgeführt, dass sie dem Protection Profile für den SMGW entsprechen.

Das Mobilfunkmodul weist ferner ein eingebettetes System (embedded System, also eine Kombination aus Hardware und Software, die für Ausübung dieser Funktion innerhalb des größeren Systems Mobilfunkmodul entwickelt wurde) auf, das zum Betrieb eines Netzwerkmanagement-Clients eingerichtet ist. Dieser Netzwerkmanagement-Client kommuniziert wenn er betrieben wird über das Mobilfunknetz mit einem Netzwerkmanagement-Server.

Erfindungswesentlich ist, dass ein zusätzliches Sicherheitsmodul direkt an das Mobilfunkmodul angebunden ist, mit dem der Netzwerkmanagement-Client zusammenwirkt, um verschlüsselt mit dem Netzwerkmanagement-Server zu kommunizieren. Dieses zusätzlich Sicherheitsmodul dient dazu, sicherheitsrelevante Funktionalitäten bereitzustellen; insbesondere leistet es eine Zufallszahlengenerierung mit hoher Entropie, stellt einen sicheren Speicher für Schlüssel bereit und bietet eine Basis für die Durchführung von Verschlüsselungsverfahren. Vorzugsweise erfüllt dieses Sicherheitsmodul die Voraussetzungen des EAL 6+ Levels nach den Common Criteria (CC).

Direkt angebunden bedeutet dabei insbesondere, dass das Sicherheitsmodul mit auf der Platine des Mobilfunkmoduls angeordnet ist und direkt mit dem Mobilfunkmodul kommuniziert. Es kann gegebenenfalls auch auf dem Mobilfunkmodul implementiert sein, darf dann aber nicht in den sonstigen Betrieb des Mobilfunkmoduls involviert sein und/oder lediglich zur Implementation proprietärer Algorithmen verwendet werden können.

Komponenten des Smart Meter Gateways aus seinem TOE, die solche Funktionen bieten um beispielsweise die verschlüsselte Weitergabe der Metering-Daten zu leisten, sind hingegen nicht direkt an das Mobilfunkmodul angebunden.

Das Vorsehen eines zusätzlichen, direkt an das Mobilfunk-Modul angebundenen Sicherheitsmoduls sichert die Kommunikation beim Betrieb des Netzwerkmanagement-Clients unabhängig ab und kann so durch diesen Betrieb entstehende Sicherheitsrisiken signifikant reduzieren. Insbesondere erlaubt ein solches Sicherheitsmodul eine hohe Kontrolle über Verschlüsselungsalgorithmen und Schlüssel und erlaubt eine sicherheitstechnische Zertifizierung.

In einer bevorzugten Weiterbildung ist bei dem Smart Meter Gateway das Mobilfunk-Modul über eine serialisierte USB-Schnittstelle angebunden, die -insbesondere innerhalb des TOE- so konzipiert ist, dass aus dem Modem heraus keine Kommandos an den Prozessor gerichtet werden können, was insbesondere dadurch erreicht werden kann, dass die Software auf dem Prozessor keine Kommandoaufrufe von dieser Schnittstelle akzeptiert. Dies stellt eine zusätzliche Absicherung gegen eine Einflussnahme Dritter auf die ordnungsgemäße Funktionsfähigkeit dar.

Bevorzugt ist es wegen der damit verbundenen Erhöhung der Sicherheit weiter, wenn das Mobilfunk-Modul so eingerichtet ist, dass es einen ersten Kommunikationskanal für die Kommunikation mit dem autorisierten Empfänger und einen zweiten Kommunikationskanal für die Kommunikation mit dem Netzwerkmanagement-Server aufweist, so dass die WAN-Verbindung für das Netzwerkmanagement komplett von der WAN-Verbindung, die für den Metering-Betrieb genutzt wird, getrennt ist.

Eine weitere vorteilhafte Maßnahme besteht darin, dass das Mobilfunkmodul sowohl für eine Konfiguration durch AT-Kommandos, die vom Prozessor an das Mobilfunkmodul gerichtet werden, als auch für eine Konfiguration durch den Netzwerkmanagement-Client eingerichtet ist. Dies erlaubt es insbesondere, auch wenn das Smart Meter Gateway noch nicht in ein Netzwerkmanagementsystem eingebunden ist, dieses Smart Meter Gateway schon ordnungsgemäß in Betrieb zu nehmen.

Das erfindungsgemäße Verfahren dient zum Betrieb eines Smart Meter Gateways mit einem Mobilfunkmodul, an das ein Sicherheitsmodul direkt angebunden ist, und mit einem Prozessor, der mit einem Arbeitsspeicher und/oder einem Flashspeicher zusammenwirkt, um auf einem Betriebssystem eine Applikationssoftware für SMGWs zu betreiben, wobei das Mobilfunkmodul ferner ein eingebettetes System (embedded system) aufweist. Bei dem Verfahren werden mit der Applikationssoftware für SMGWs Messdaten, insbesondere von Verbrauchsmessstellen, ausgelesen und verschlüsselt zur Weiterleitung an einen autorisierten Empfänger an das Mobilfunkmodul übergeben. Ferner wird bei dem Verfahren mit dem eingebetteten System auf dem Mobilfunkmodul ein Netzwerkmanagement-Client betrieben, der über das Mobilfunknetz mit einem Netzwerkmanagement-Server kommuniziert. Wesentlich für das erfindungsgemäße Verfahren ist, dass die Kommunikation zwischen den Netzwerkmanagement-Client und dem Netzwerkmanagement-Server mit dem direkt an das Mobilfunkmodul angebundenen Sicherheitsmodul verschlüsselt wird. Dies sichert die Kommunikation beim Betrieb des Netzwerkmanagement-Clients unabhängig ab und kann so durch diesen Betrieb entstehende Sicherheitsrisiken signifikant reduzieren. Insbesondere erlaubt der Rückgriff auf die Verschlüsselung mit einem solchen Sicherheitsmodul eine hohe Kontrolle über Verschlüsselungsalgorithmen und Schlüssel und erlaubt eine sicherheitstechnische Zertifizierung.

Vorzugsweise erfolgt die Konfiguration des Mobilfunkmoduls wahlweise durch AT-Kommandos des Prozessors oder durch den Netzwerkmanagement-Client. Dadurch ist die ordnungsgemäße Inbetriebnahme des Smart Meter Gateways auch dann gewährleistet, wenn er noch nicht in das Netzwerkmanagement integriert ist.

Bevorzugt ist es ferner, wenn die Netzwerkmanagement-Kommunikation über einen separaten Kommunikationskanal mit separatem Zielnetzwerk erfolgt, z.B. mittels Dual APN on LTE-Technik. Auch diese Maßnahme reduziert die Anfälligkeit des Smart Meter Gateways gegen Angriffe Dritter.

In einer bevorzugten Variante der Erfindung wird bei dem Verfahren ein Standard-Netzwerkmanagement-Protokoll, insbesondere SNMP oder LwM2M, für die Bereitstellung der Netzwerkmanagement-Funktionalität verwendet. Dieses erlaubt die Überwachung und Konfiguration von für den Betrieb des SMGWs wichtigen Parametern.

Dadurch, dass die Implementierung einschließlich der Verschlüsselung selbst realisiert wird und nicht auf eingebaute Verschlüsselungsmechanismen des LTE Moduls selbst zurückgegriffen wird, wird im Gegensatz zu der Situation bei der Verwendung spezieller, proprietärer Lösungen die Offenlegung des Source Codes, die zum Nachweis der Erfüllung der sicherheitstechnischen Anforderungen und/oder zur Zertifizierung notwendig ist, möglich.

Vorzugsweise werden zur Verschlüsselung mit dem direkt an das Mobilfunkmodul angebundenen Sicherheitsmodul starke Verschlüsselungsverfahren verwendet.

Bevorzugt ist ferner, dass der komplette Sourcecode der Software zum Betrieb des Smart Meter Gateways einschließlich des Mobilfunkmoduls zur Zertifizierung offengelegt wird.

Die Erfindung wird nachfolgend anhand einer Figur näher erläutert.

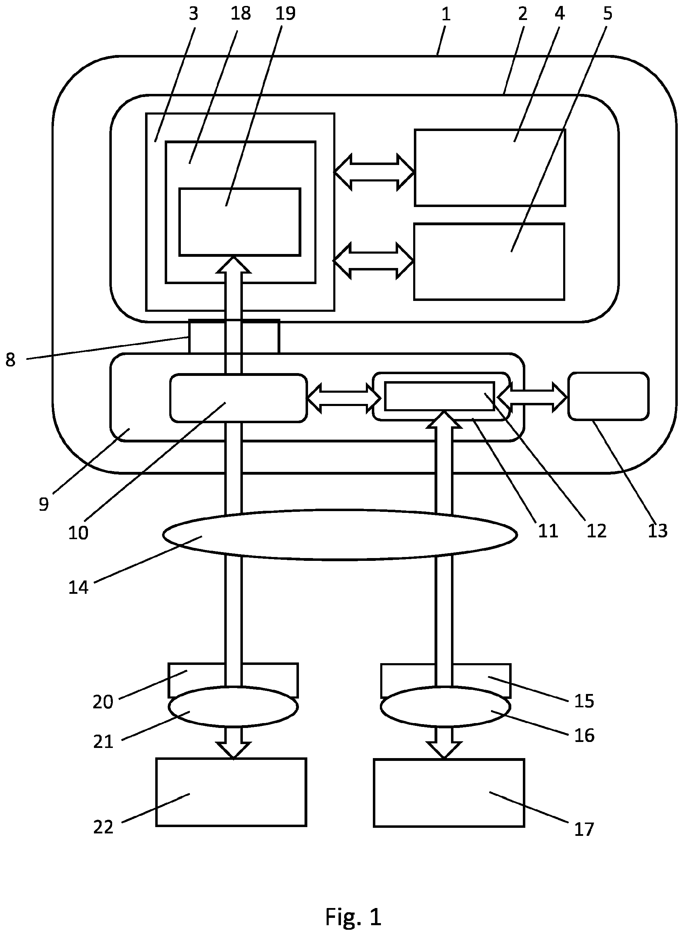

Figur 1 zeigt ein Ausführungsbeispiel eines Smart Meter Gateways.

Der in Figur 1 dargestellte Smart Meter Gateway 1 hat ein Target of Evaluation 2, das einen Prozessor 3, der mit einem Arbeitsspeicher 4 und einem Flashspeicher 5 zusammenwirkt. Über eine serialisierte USB-Schnittstelle 8, die eine Ausführung von Kommandos nur aus dem Target of Evaluation 2 heraus erlaubt, ist ein Mobilfunkmodul 9 angebunden.

Das Mobilfunkmodul 9 weist ein Modem 10 sowie ein eingebettetes System (embedded system) 11 auf, auf dem ein Netzwerkmanagement-Client 12 ausgeführt wird, wobei ein Standard-Netzwerkmanagement-Protokoll wie z.B. SNMP oder LwM2M implementiert wird.

An das Mobilfunkmodul 9 ist unmittelbar ein zusätzliches Sicherheitsmodul 13 angebunden, das in diesem Ausführungsbeispiel dem EAL 6+ Sicherheitslevel der Common Criteria (CC) erfüllt und insbesondere die sicherheitsrelevanten Funktionalitäten für eine Verschlüsselung bereitstellt, wozu insbesondere eine Zufallszahlengenerierung mit hoher Entropie, die Bereitstellung von Basis-Verschlüsselungsverfahren und ein sicherer Speicher für Schlüssel gehören.

Das zusätzliche Sicherheitsmodul 13, wirkt mit dem Netzwerkmanagement-Client 12 zusammen, um verschlüsselt über das Mobilfunknetz 14, den Netzwerkmanagement APN (access point) 15 und das interne Netzwerkmanagement Netz 16 mit dessen Backend-Server, dem Netzwerkmanagement-Server 17 zu kommunizieren.

Der Prozessor 3 wirkt insbesondere mit dem Arbeitsspeicher 4 und dem Flashspeicher 5 zusammen, um auf einem Betriebssystem 18 eine Applikationssoftware für SMGWs 19 zu betreiben, mit der Messdaten insbesondere von Geräten aus einem lokalen metrologischen Netz ausgelesen und verschlüsselt zur Weiterleitung an den autorisierten Empfänger an das Mobilfunkmodul 9 übergeben werden, das sie über das Modem 10 und das Mobilfunknetz 14 sowie den Metering APN (Access point) 20 und das interne Metering Netz 21 mit dessen Backend-Server, dem Metering Server 22 zu kommuniziert, und dadurch die mit der Applikationssoftware für SMGWs 19 ausgelesen Messdaten verschlüsselt an den autorisierten Empfänger weiterzuleiten.

Dementsprechend ist beim Betrieb des Smart Meter Gateways 1 aus Figur 1 die WAN-Verbindung für das Netzwerkmanagement komplett von der WAN-Verbindung, die für den Metering-Betrieb genutzt wird, getrennt und die Netzwerkmanagementkommunikation erfolgt über einen separaten Kommunikationskanal.

### Bezugszeichenliste

- 1: Smart Meter Gateway
- 2: Target of Evaluation
- 3: Prozessor
- 4: Arbeitsspeicher
- 5: Flashspeicher
- 8: serialisierte USB-Schnittstelle
- 9: Mobilfunkmodul
- 10: Modem
- 11: eingebettetes System
- 12: Netzwerkmanagement-Client
- 13: zusätzliches Sicherheitsmodul
- 14: Mobilfunknetz
- 15: Netzwerkmanagement APN
- 16: Netzwerkmanagement Netz
- 17: Netzwerkmanagement-Server
- 18: Betriebssystem
- 19: Applikationssoftware für SMGWs
- 20: Metering APN
- 21: Metering Netz
- 22: Metering Server

## Patentansprüche

1. Smart Meter Gateway (1) mit einem Mobilfunkmodul (9), das eingerichtet ist, um über ein Mobilfunknetz (14) Stromnetzspezifische Daten an einen autorisierten Empfänger auszutauschen,
und mit einem Prozessor (3), der mit einem Arbeitsspeicher (4) und/oder einem Flashspeicher (5) zusammenwirkt, um auf einem Betriebssystem (18) eine Applikationssoftware für SMGWs (19) zu betreiben, mit der Messdaten ausgelesen und verschlüsselt zur Weiterleitung an den autorisierten Empfänger an das Mobilfunkmodul (9) übergeben werden,
wobei das Mobilfunkmodul (9) ferner ein eingebettetes System (11) aufweist, das zum Betrieb eines Netzwerkmanagement-Clients (12) eingerichtet ist, der über das Mobilfunknetz (14) mit einem Netzwerkmanagement-Server (17) kommuniziert,
und
ein zusätzliches Sicherheitsmodul (13) direkt an das Mobilfunk-modul (9) angebunden ist, mit dem der Netzwerkmanagement-Client (12) zusammenwirkt, um verschlüsselt mit dem Netzwerkmanagement-Server (17) zu kommunizieren.

2. Smart Meter Gateway (1) nach Anspruch 1,
**dadurch gekennzeichnet, dass** das Mobilfunk-Modul (9) über eine serialisierte USB-Schnittstelle (8) angebunden ist, so dass aus dem Mobilfunk-Modul (9) heraus keine Kommandos an den Prozessor (3) gerichtet werden können.

3. Smart Meter Gateway (1) nach Anspruch 1,
**dadurch gekennzeichnet, dass** das Mobilfunk-Modul (9) so eingerichtet ist, dass es einen ersten Kommunikationskanal für die Kommunikation mit dem autorisierten Empfänger und einen zweiten Kommunikationskanal für die Kommunikation mit dem Netzwerkmanagement-Server (17) aufweist, so dass das Netzwerkmanagement-Netz komplett vom Metering-Netz getrennt ist.

4. Smart Meter Gateway (1) nach einem der Ansprüche 1 bis 3, **dadurch gekennzeichnet, dass** das Mobilfunkmodul (9) sowohl für eine Konfiguration durch AT-Kommandos, die vom Prozessor (3) an das Mobilfunkmodul (9) gerichtet werden, als auch für eine Konfiguration durch den Netzwerkmanagement-Client (12) eingerichtet ist.

5. Verfahren zum Betrieb eines Smart Meter Gateways (1) mit einem Mobilfunkmodul (9), an das ein Sicherheitsmodul (13) direkt angebunden ist, und mit einem Prozessor (3), der mit einem Arbeitsspeicher (4) und/oder einem Flashspeicher (5) zusammenwirkt, um auf einem Betriebssystem (18) eine Applikationssoftware für SMGWs (19) zu betreiben, wobei das Mobilfunkmodul (9) ferner ein eingebettetes System (11) aufweist,
wobei bei dem Verfahren mit der Applikationssoftware für SMGWs (19) Messdaten ausgelesen und verschlüsselt zur Weiterleitung an einen autorisierten Empfänger an das Mobilfunkmodul (9) übergeben werden, und
mit dem eingebetteten System (11) auf dem Mobilfunkmodul (9) ein Netzwerkmanagement-Client (12) betrieben wird, der über das Mobilfunknetz (14) mit einem Netzwerkmanagement-Server (17) kommuniziert,
wobei die Kommunikation zwischen dem Netzwerkmanagement-Client (12) und dem Netzwerkmanagement-Server (17) unter zu Hilfenahme des direkt an das Mobilfunkmodul (9) angebundenen Sicherheitsmoduls (13) verschlüsselt wird.

6. Verfahren nach Anspruch 5,
**dadurch gekennzeichnet, dass** die Konfiguration des Mobilfunkmoduls (9) wahlweise durch AT-Kommandos des Prozessors (3) oder durch den Netzwerkmanagement-Client (12) erfolgt.

7. Verfahren nach Anspruch 5 oder 6,
**dadurch gekennzeichnet, dass** die Netzwerkmanagement-Kommunikation über einen separaten Kommunikationskanal mit separatem Zielnetzwerk erfolgt.

8. Verfahren nach einem der Ansprüche 5 bis 7,
**dadurch gekennzeichnet, dass** ein Standard-Netzwerkmanagement-Protokoll für die Bereitstellung der Netzwerkmanagement-Funktionalität verwendet wird.

9. Verfahren nach einem der Ansprüche 5 bis 8,
**dadurch gekennzeichnet, dass** zur Verschlüsselung mit dem direkt an das Mobilfunkmodul (9) angebundenen Sicherheitsmodul (13) starke Verschlüsselungsverfahren verwendet werden.

10. Verfahren nach einem der Ansprüche 5 bis 9,
**dadurch gekennzeichnet, dass** der komplette Sourcecode der Software zum Betrieb des Smart Meter Gateways (1) einschließlich der Netzwerkmanagement Applikation) zur Zertifizierung offengelegt wird.

## Claims

1. Smart meter gateway (1) comprising a mobile radio module (9) which is configured to exchange power supply-specific data with an authorised receiver via a mobile radio network (14),
and comprising a processor (3) which interacts with a working memory (4) and/or a flash memory (5) in order to operate application software for SMGWs (19) on an operating system (18), with which software measurement data are read out and delivered to the mobile radio network (9) encrypted for forwarding to the authorised receiver,
wherein the mobile radio module (9) further comprises an embedded system (11) which is configured for operating a network management client (12) which communicates with a network management server (17) via the mobile radio network (14),
and an additional security module (13) is connected directly to the mobile radio module (9), with which security module the network management client (12) interacts in order to communicate in an encrypted manner with the network management server (17).

2. Smart meter gateway (1) according to claim 1, **characterised in that** the mobile radio module (9) is connected via a serial USB interface (8) in such a way that no commands can be directed from the mobile radio interface (9) to the processor (3).

3. Smart meter gateway (1) according to claim 1, **characterised in that** the mobile radio module (9) is configured in such a way that it comprises a first communication channel for communication with the authorised receiver and a second communication channel for communication with the network management server (17), such that the network management network is completely separated from the metering network.

4. Smart meter gateway (1) according to any of claims 1 to 3, **characterised in that** the mobile radio module (9) is designed both for a configuration by AT commands that are directed from the processor (3) to the mobile radio module (9) and for a configuration by the network management client (12).

5. Method for operating a smart meter gateway (1) comprising a mobile radio module (9) to which a security module (13) is directly connected, and comprising a processor (3) which interacts with a working memory (4) and/or a flash memory (5) in order to operate application software for SMGWs (19) on an operating system (18), wherein the mobile radio module (9) further comprises an embedded system (11),
wherein in the method the application software for SMGWs (19) reads out measured data and delivers said data encrypted to the mobile radio module (9) for forwarding to an authorised receiver, and
a network management client (12) is operated with the embedded system (11) on the mobile radio network (9), which client communicates with a network management server (17) via the mobile radio network (14),
wherein the communication between the network management client (12) and the network management server (17) is encrypted with the aid of the security module (13) that is directly connected to the mobile radio module (9).

6. Method according to claim 5,
**characterised in that** the configuration of the mobile radio module (9) takes place selectively by AT commands of the processor (3) or by the network management client (12).

7. Method according to either claim 5 or claim 6, **characterised in** tat the network management communication takes place via a separate communication channel with a separate target network.

8. Method according to any of claims 5 to 7, **characterised in that** a standard network management protocol is used for providing the network management functionality.

9. Method according to any of claims 5 to 8, **characterised in that** strong encryption methods are used for the encryption with the security module (13) that is directly connected to the mobile radio module (9).

10. Method according to any of claims 5 to 9, **characterised in that** the complete source code of the software for operating the smart meter gateway (1), including the network management application, is published for certification.

## Revendications

1. Passerelle (1) de compteur intelligent comprenant un module radio (9) mobile, qui est agencé pour, par l'intermédiaire d'un réseau radio (14) mobile, échanger des données spécifiques à un réseau de trafic avec un récepteur autorisé,
et comprenant un processeur (3), qui coopère avec une mémoire (4) de travail et/ou une mémoire (5) flash, afin de faire fonctionner, sur un système (18) de fonctionnement, un logiciel d'application pour des SMGWs (19), par lequel on lit des données de mesure et on les transmet, de manière chiffrée, au module radio (9) mobile pour l'acheminement au récepteur autorisé,
dans lequel le module radio (9) mobile a, en outre, un système (11) incorporé, qui est agencé pour le fonctionnement d'un client (12) de gestion de réseau, qui communique avec un serveur (17) de gestion de réseau par l'intermédiaire du réseau radio (14) mobile,
et un module (13) supplémentaire de sécurité est rattaché directement au module radio (9) mobile, avec lequel le client (12) de gestion de réseau coopère afin de communiquer, de manière chiffrée, avec le serveur (17) de gestion de réseau.

2. Passerelle (1) de compteur intelligent suivant la revendication 1,
**caractérisée en ce que** le module radio (9) mobile est rattaché, par l'intermédiaire d'une interface (8) USB sérialisée, de manière à ce que des instructions ne puissent pas, à partir du module radio (9) mobile, être dirigées sur le processeur (3).

3. Passerelle (1) de compteur intelligent suivant la revendication 1,
**caractérisée en ce que** le module radio (9) mobile est agencé de manière à avoir un premier canal de communication pour la communication avec le récepteur autorisé et un deuxième canal de communication pour la communication avec le serveur (17) de gestion de réseau, de manière à séparer le réseau de gestion de réseau complètement du réseau de mesurage.

4. Passerelle (1) de compteur intelligent suivant l'une des revendications 1 à 3,
**caractérisée en ce que** le module radio (9) mobile est agencé tant pour une configuration par des instructions AT, qui sont envoyées du processeur (3) au module radio (9) mobile, qu'est également pour une configuration par le client (12) de gestion de réseau.

5. Procédé pour faire fonctionner une passerelle (1) de compteur intelligent comprenant un module radio (9) mobile, auquel un module (13) de sécurité est rattaché directement, et comprenant un processeur (3), qui coopère avec une mémoire (4) de travail et/ou une mémoire (5) flash, afin de faire fonctionner, sur un système (18) de fonctionnement, un logiciel d'application pour des SMGWs (19), dans lequel le module radio (9) mobile a, en outre, un système (11) incorporé,
dans lequel, dans le procédé, avec le logiciel d'application pour des SMGWs (19) des données de mesure sont lues et transmises, de manière chiffrée, au module radio (9) mobile pour l'acheminement à un récepteur autorisé, et
par le système (11) incorporé sur le module radio (9) mobile, on fait fonctionner un client (12) de gestion de réseau, qui communique avec un serveur (17) de gestion de réseau par le réseau radio (14) mobile,
dans lequel la communication entre le client (12) de gestion de réseau et le serveur (17) de gestion de réseau est chiffrée à l'aide du module (13) de sécurité, rattaché directement au module radio (9) mobile.

6. Procédé suivant la revendication 5,
**caractérisé en ce que** la configuration du module radio (9) mobile s'effectue au choix par des instructions AT du processeur (3) ou par le client (12) de gestion de réseau.

7. Procédé suivant la revendication 5 ou 6,
**caractérisé en ce que** la communication de la gestion de réseau avec un réseau cible distinct s'effectue par l'intermédiaire d'un canal de communication distinct.

8. Procédé suivant l'une des revendications 5 à 7,
**caractérisé en ce qu'**un protocole standard de gestion de réseau est utilisé pour la mise à disposition d'une fonctionnalité de gestion de réseau.

9. Procédé suivant l'une des revendications 5 à 8,
**caractérisé en ce que**, pour le chiffrement par le module (13) de sécurité rattaché directement au module radio (9) mobile, on utilise un procédé de chiffrement robuste.

10. Procédé suivant l'une des revendications 5 à 9,
**caractérisé en ce que** le code source complet du logiciel pour le fonctionnement de la passerelle (1) de compteur intelligent est, y compris l'application de gestion de réseau, rendu public pour la certification.
